# EUROPEAN PATENT SPECIFICATION

(11) **EP 0 427 302 B1**
(45) Date of publication and mention of the grant of the patent: **30.08.1995**
(21) Application number: 90201718.5
(22) Date of filing: 28.06.1990
(51) Int. Cl.: G11B 7/08, G11B 7/09

(54) **Master optical disk recording apparatus**
Aufzeichnungsvorrichtung für eine optische Matrizenplatte
Dispositif d'enregistrement d'une matrice de disque optique

(30) Priority: 07.11.1989 JP 289247/89
(43) Date of publication of application: 15.05.1991
(73) Proprietor: PIONEER ELECTRONIC CORPORATION, Meguro-ku Tokyo 153 (JP)
(72) Inventor: Wada, Yasumitsu, c/o Pioneer Electronic Corp., Tsurugashima-machi,Iruma-gun, Saitama (JP); Kojima, Yoshiaki, c/o Pioneer Electronic Corp., Tsurugashima-machi, Iruma-gun, Saitama (JP); Iizuka, Masatoshi, c/o Pioneer Electronic Corp., Tsurugashima-machi, Iruma-gun, Saitama (JP)
(74) Representative: Smulders, Theodorus A.H.J., Ir.

(56) References cited:
- EP-A- 0 130 596
- GB-A- 2 159 293
- US-A- 4 730 298

## Description

The present invention relates to a master optical disk recording apparatus as defined in the preamble of claim 1.

In any master optical disk recording apparatus it is necessary to carry out accurate positioning of the objective lens, in the feeding direction, in order to be able to record information on a surface of a master optical disk while irradiating the disk surface with a recording light beam. Accordingly, the distance between the objective lens and a reference position, seen in the feeding direction of the objective lens, is measured by means of a laser displacement meter, and the positioning of the objective lens in its feeding direction is carried out on the basis of the output of the measurement. The resolution of such a laser displacement meter is about 0.016 »m.

The publication US-A-4.730.298 describes a master optical disk recording apparatus as described in the preamble of claim 1. In this known apparatus, the radial positioning of the objective lens with respect to the optical disk is only performed by said first driving means. As a consequence, in this known apparatus the total combination of carriage means, optical head and objective lens must be positioned with the required accuracy. This is a disadvantage, because the weight of this combination is so large that the control bandwidth of the drive system cannot be made high, the control gain cannot be made large, and hence there is a limit in making the accuracy of the recording track high.

### SUMMARY OF THE INVENTION

It is therefore an object of the present invention to provide a master optical disk recording apparatus in which the control band of the drive system is made high so that the control gain can be made large and information can be recorded on a track with high precision and accuracy.

This objective is attained by the characterizing features of claim 1. With these features, the position of the optical head with respect to optical disk can be adjusted roughly whereas the position of the objective lens with respect to the optical head can be adjusted finely. Hence, the weight of the portion of the apparatus which needs be moved accurately is reduced.

### BRIEF DESCRIPTION OF THE DRAWINGS

Fig.1 is a diagram showing the configuration of an embodiment of the present invention;
Fig.2 is a perspective view showing an example of the configuration of a biaxial actuator;
Fig. 3 is a block diagram showing an example of the configuration of the control system of the optical head; and
Figs. 4 through 6 are perspective views showing other examples according to the present invention of the configuration of the biaxial actuator.

### DETAILED DESCRIPTION OF THE PREFERRED EMBODIMENT

Referring to the accompanying drawings, an embodiment of the present invention will now be described hereunder.

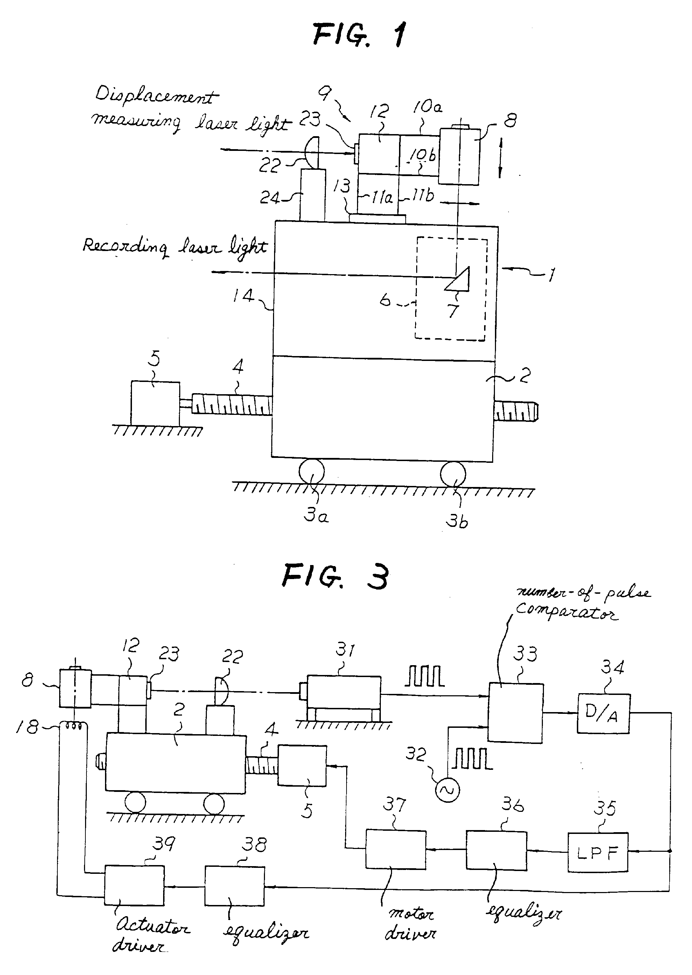

In Fig. 1, a carriage 2 carrying an optical head 1 is provided so as to be movable in the radial direction (right/left direction in the drawing) of a master optical disk (not shown) through cross roller guides 3a and 3b. The carriage 2 is arranged so as to be driven by a feed screw 4 thread-engaged with a thread-engagement portion (not shown) of the carriage 2 and an electric motor 5 for driving the feed screw 4 to move in the radial direction.

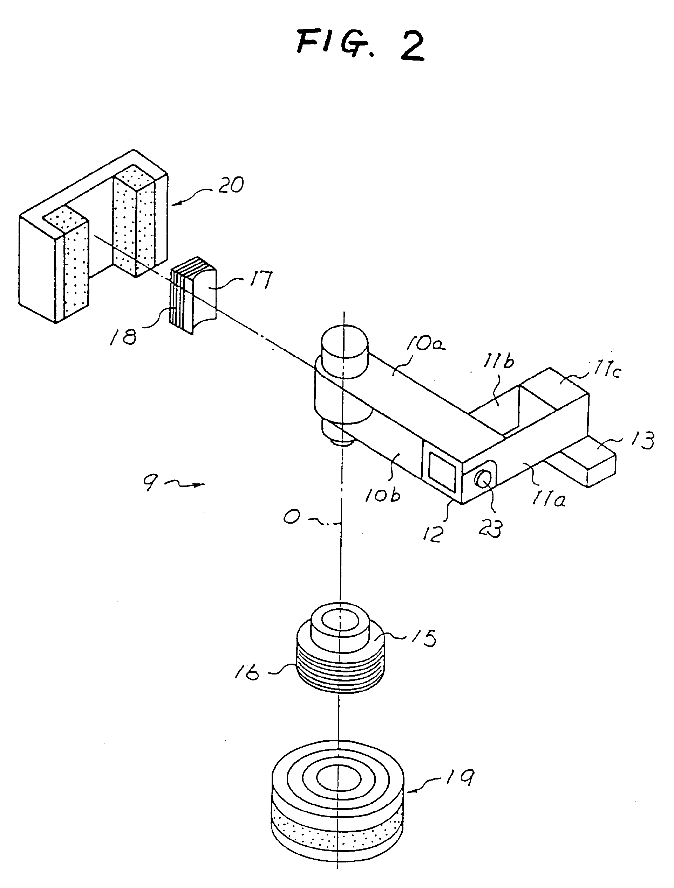

In the optical head 1, the optical path of a recording laser light beam taken into the optical head 1 from the outside is orthogonally bent by a reflection mirror 7 in an optical system 6 so as to be led into an objective lens 8 for converging the beam on a disk surface of the master optical disk. The objective lens 8 is supported by a biaxis actuator 9 so as to be movable relative to the carriage 2 in the direction of the optical axis of the objective lens 8 (focusing direction) and in the moving direction of the carriage 2 (radial direction). The biaxis actuator 9 has such a configuration that, for example as shown in Fig. 2, a pair of focus plate springs 10a and 10b, and a pair of radial plate springs 11a and 11b are coupled with each other through an intermediate connector 12, for example, so as to be L-shaped in a plane perpendicular to the optical axis O. A base portion 11c of the radial plate springs 11a and 11b is fixed to an optical head base 14 through a base 13, and the objective lens 8 is attached to the free ends of the focus plate springs 10a and 10b.

A focus coil 16 wound on the circumferential wall of a cylindrical coil bobbin 15 is attached to the objective lens 8 through the coil bobbin 15, and a radial coil 18 wound on the circumferential wall of a rectangular coil bobbin 17 is attached to the objective lens 8 through the coil bobbin 17. A focus magnetic circuit portion 19 and a radial magnetic circuit portion 20 are fixed to the optical head base 14 so that when electrical currents are applied to the focus coil 16 and the radial coil 18 the focus magnetic circuit portion 19 and the radial magnetic circuit portion 20 give driving force to the focus coil 16 and radial coil 18 in the direction corresponding to the polarity of the applied currents respectively.

As a displacement measuring means for measuring the distance of the moved position of the optical head 1 from a reference position, there is provided a laser displacement measuring system 31. In the laser displacement measuring device 31, it is required to measure the position of the objective lens 8 since the objective lens 8 is provided so as to be movable in the radial direction. To this end, a combination of a convex lens 22 and a plane mirror 23 are used as a reflection means for reflecting a displacement measuring laser light beam emitted from the laser displacement measuring device 31 so as to be parallel to an incident light beam on the optical head 1. The convex lens 22 is fixed to the optical head base 14 through a base 24 and the plane mirror 23 is attached, for example, to the intermediate connector 12, so as to be positioned in the vicinity of the focal point of the convex lens 22. Since the intermediate connector 12 moves in the radial direction integrally with the objective lens 8, it is possible to obtain the measurement value of the objective lens 8. Although the position of the plane mirror 23 comes out of the focal point of the convex lens 22 as the objective lens 8 displaces in the radial direction,
it is possible to sufficiently cope with the displacement of the objective lens 8 if design is made so as to use a lens having a sufficiently small numerical aperture (N.A.) as the convex lens 22 to make the depth of focus of the lens deep.

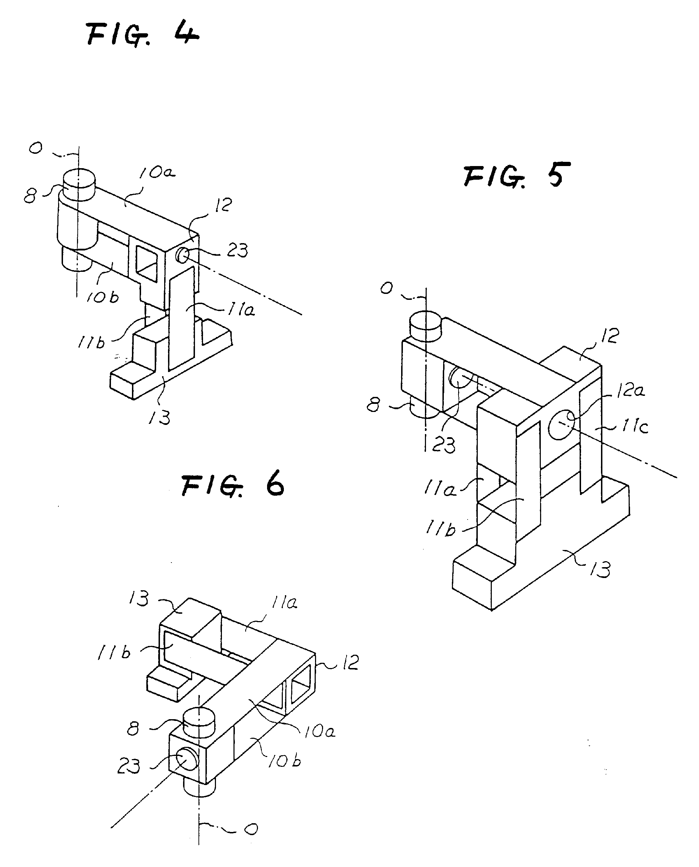

Fig. 3 is a block diagram showing an example of the configuration of a control system of the optical head 1. In the drawing, the laser displacement measuring device 31 can measure the displacement of the plane mirror 23 attached to the intermediate connector 12, which is an object to be measured, with a resolving power of, for example, one pulse per 0.016 »m. When the feed system of the optical head 1 is fed at a certain speed, pulses are generated from the laser displacement measuring device 31 at a period inverse proportional to the speed. The respective numbers in a predetermined time of, the output pulses of the laser displacement measuring device 31 and of the pulses generated from a reference signal generator 32 with a period corresponding to the desired speed are compared with each other by a number-of-pulse comparator 33. The conversion output of the number-of-pulse comparator 33 is converted by a D/A converter 34 so as to obtain an analog signal which is used as an error signal.

This error signal is fed back to a carriage driving system for roughly adjusting the optical head 1 in the radial direction of the master optical disk and to a radial actuator for finely adjusting the optical head 1 by driving the objective lens 8 in the radial direction so as to record information with a high-accurate track pitch. More specifically, only a low frequency component of the error signal is led out through a low pass filter 35 and fed back to the feed motor 5 of the carriage driving system bearing the rough adjustment through an equalizer 36 and a motor driver 37. On the other hand, the error signal is fed as it is through an equalizer 38 and an actuator driver 39 back to the radial coil 18 of the radial actuator mainly bearing the fine adjustment.

In the control system having such a configuration, the carriage driving system and the radial actuator are controlled in the direction so as to decrease the number of the pulses of the laser displacement measuring device 31 when the number of the pulses of the laser displacement measuring device 31 is larger than the number of reference pulses from the reference signal generator 32 and vice versa. The configuration of the control system is not limited to that illustrated above, but the control system may be arranged so as to control a desired displacement.

Further, although the above embodiment has been illustrated such that the focus plate springs 10a and 10b and the radial plate springs 11a and 11b are coupled with each other so as to be L-shaped in a plane perpendicular to the optical axis O, the configuration may be modified in a manner as shown in Fig. 4 such that the focus plate springs 10a and lob and the radial plate springs 11a and 11b are coupled with each other so as to be L-shaped in a plane including the optical axis O. What is essential is that the objective lens 8 can be supported by the biaxial actuator 9 so that the objective lens is displaceable in the focusing direction and in the radial direction.

Although the above embodiment has been illustrated such that the plane mirror 23 is attached to the intermediate connector 12 which displaces integrally with the objective lens 8 in the radial direction, the configuration may be modified in a manner as shown in Fig. 5 such that in the arrangement in which the focus plate springs and radial plate springs are coupled with each other so as to be L-shaped in a plane including optical axis, the plane mirror 23 is fixed directly to the objective lens 8, the intermediate connector 12 is supported by the four plate springs 11a - 11d in the radial direction, a through hole 12a is formed in the intermediate connector 12 so as to lead the displacement measuring laser light beam to the intermediate connector 12 through the through hole 12a.

Further, the configuration may be modified in a manner as shown in Fig. 6 such that in the arrangement in which the focus plate springs and radial plate springs are coupled with each other so as to be L-shaped in a plane perpendicular to the optical axis, the objective lens 8 is disposed on the light source side of the displacement measuring laser light than the intermediate connector 12 and the plane mirror 23 is fixed directly to the objective lens 8.

Furthermore, although the above embodiment has been illustrated such that the combination of the feed screw 4 and the feed motor 5 are used as a driving source of the carriage 2, the driving source is not limited to this but, for example, a so-called voice-coil type linear motor may be used.

In the master optical disk recording apparatus according to the present invention, as described above, the objective lens in the optical head is supported by a biaxial actuator so that the objective lens is movable relative to the carriage in the two directions, that is, in the direction of the optical axis of the objective lens and the moving direction of the optical head, and, as the reflection means of the displacement measuring means, the combination of a convex lens and a plane mirror positioned in the vicinity of a focal point of the convex lens is used. Since the plane mirror is fixed to the objective lens to thereby reduce the weight of the driven portion of the optical head, the control band of the driving system can be made high and the control gain can be made large so that information can be made recorded on the precisely accurate track.

## Claims

1. A master optical disk recording apparatus, comprising:
- an optical head (1) for directing a recording light beam towards a disk surface of a master optical disk in order to record information on said disk surface, said optical head (1) comprising an objective lens (8);
- carriage means (2) carrying said optical head (1);
- displacement measuring means (31) for measuring a distance of a position of said optical head (1) with respect to a reference position, said displacement measuring means (31) comprising a source for a laser beam, means for emitting the laser beam in the direction of said optical head (1), reflection means (23) for reflecting the emitted laser beam, and receiving means for receiving the reflected laser beam;
first driving means (4, 5, 37) for driving a movement of the carriage means (2) in a radial direction with respect to said optical disk in response to a first output value of said displacement measuring means (31);
**characterized in:**
that the optical head (1) comprises a biaxal actuator means (9) for supporting the objective lens (8) so that the objective lens (8) is movable relative to the carriage (2), in the direction of the optical axis of the objective lens (8) and in the radial direction;
that a second driving means (18, 39) is provided for driving a movement of the objective lens (8) relative to the carriage (2) in response to a second output value of said displacement measuring means (31).

2. An optical disk recording apparatus as claimed in claim 1, wherein an arrangement of said biaxial actuator means (9) which comprises two focus plate springs (10a, 10b) and two radial plate springs (11a, 11b) coupled with each other through an intermediate connector (12) is formed in a plate perpendicular to said optical axis of said objective lens.

3. An optical disk recording apparatus as claimed in claim 1, wherein an arrangement of said biaxal actuator means (9) which comprises two focus plate springs (10a, 10b) and two radial plate springs (11a, 11b) coupled with each other through an intermediate connector (12) is formed in a plate parallel to said optical axis of said objective lens.

4. An optical disk recording apparatus as claimed in claim 1, wherein said reflection means (22, 23) includes a convex lens (22) provided on said optical head and arranged on said optical axis of said displacement measuring light beam, and a plane mirror (23) fixed to at least one of said objective lens and said intermediate connector (12), and positioned in a vicinity of a focal point of said convex lens.

5. An optical disk recording apparatus as claimed in claim 1, wherein said second driving means comprises an actuator driver (39), and a radial coil (18) attached with the said biaxial actuator means (9).

## Patentansprüche

1. Aufzeichnungsvorrichtung für eine optische Matrizenplatte, versehen mit:
- einem optischen Kopf (1) zum Richten eines Aufzeichnungslichtstrahles auf eine Plattenoberfläche einer optischen Matrizenplatte zum Aufzeichnen von Information auf diese Plattenoberfläche, welcher optische Kopf (1) eine Objektivlinse (8) aufweist;
- Tragmitteln (2) zum Tragen des optischen Kopfes (1);
- Verschiebungsmeßmitteln (31) zum Messen eines Abstandes einer Position des optischen Kopfes (1) relativ zu einer Bezugsposition, welche Verschiebungsmeß (31) versehen sind mit einer Laserstrahlquelle, Mitteln zum Aussenden des Laserstrahles in Richtung auf den optischen Kopf (1), Reflexionsmitteln (23) zum Reflektieren des ausgesendeten Laserstrahles und Empfangsmitteln zum Empfangen des reflektierten Laserstrahles;
ersten Antriebsmitteln (4, 5, 37) zum Antreiben einer Bewegung der Tragmittel (2) in einer Radialrichtung relativ zur optischen Platte ansprechend auf einen ersten Ausgangswert der Verschiebungsmeßmittel (31);
**dadurch gekennzeichnet:**
daß der optische Kopf (1) mit einem biaxialen Betätigungsmittel (9) zum Unterstützen der Objektivlinse (8) versehen ist, so daß die Objektivlinse (8) relativ zum Tragmittel (2) in Richtung der optischen Achse der Objektivlinse (8) und in Radialrichtung beweglich ist; daß ein zweites Antriebsmittel (18, 39) zum Antreiben einer Bewegung der Objektivlinse (8) relativ zum Tragmittel (2) ansprechend auf einen zweiten Ausgangswert der Verschiebungsmeßmittel (31) vorgesehen ist.

2. Aufzeichnungsvorrichtung für eine optische Platte nach Anspruch 1, wobei eine Anordnung des biaxialen Betätigungsmittels (9), das zwei Fokusblattfedern (10a, 10b) und zwei Radialblattfedern (11a, 11b) aufweist, die durch ein dazwischen liegendes Verbindungselement (12) miteinander gekuppelt sind, in einer senkrecht auf der optischen Achse der Objektivlinse stehenden Platte gebildet ist.

3. Aufzeichnungsvorrichtung für eine optische Platte nach Anspruch 1, wobei eine Anordnung des biaxialen Betätigungsmittels (9), das zwei Fokusblattfedern (10a, 10b) und zwei Radialblattfedern (11a, 11b) aufweist, die durch ein dazwischen liegendes Verbindungselement (12) miteinander gekuppelt sind, in einer parallel zu der optischen Achse der Objektivlinse verlaufenden Platte gebildet ist.

4. Aufzeichnungsvorrichtung für eine optische Platte nach Anspruch 1, wobei das Reflexionsmittel (22, 23) eine konvexe Linse (22) enthält, die auf dem optischen Kopf vorgesehen und auf der optischen Achse des Verschiebungsmeßlichtstrahles angeordnet ist, sowie einen Planspiegel (23), der an mindestens der Objektivlinse oder dem dazwischen liegenden Verbindungselement (12) befestigt ist und sich nahe einem Fokus der konvexen Linse befindet.

5. Aufzeichnungsvorrichtung für eine optische Platte nach Anspruch 1, wobei das zweite Antriebsmittel einen Betätigungsantrieb (39) aufweist sowie eine Radialspule (18), die an dem biaxialen Betätigungsmittel (9) angebracht ist.

## Revendications

1. Dispositif d'enregistrement d'une matrice de disque optique, comprenant;
- une tête de lecture optique (1) pour diriger un faisceau de lumière d'enregistrement vers une surface d'une matrice de disque optique afin d'enregistrer des informations sur ladite surface du disque, ladite tête de lecture optique (1) comprenant une lentille d'objectif (8);
- un chariot (2) pour porter ladite tête optique (1);
- un moyen de mesure du déplacement (31) pour mesurer la distance entre une position de ladite tête optique (1) et une position de référence, ledit moyen de mesure du déplacement (31) comprenant une source pour un faisceau laser, des moyens d'émission du faisceau laser dans ladite direction de ladite tête optique (1), des moyens réflecteurs (23) pour réfléchir le faisceau laser émis et des moyens récepteurs pour recevoir le faisceau laser réfléchi;
des moyens de commande (4, 5, 37) pour commander un mouvement du chariot (2) dans une direction radiale par rapport audit disque optique en réponse à une première valeur de sortie dudit moyen de mesure du déplacement (31);
**caractérisé en**
ce que la tête optique (1) comprend un actionneur biaxial (9) pour soutenir la lentille d'objectif (8) de telle sorte que la lentille d'objectif (8) puisse se déplacer par rapport au chariot (2) dans la direction de l'axe optique de la lentille d'objectif (8) et en direction radiale;
en ce qu'un deuxième moyen de commande (18, 39) est destiné à commander un mouvement de la lentille d'objectif (8) par rapport au chariot (2) en réponse à une deuxième valeur de sortie dudit moyen de mesure du déplacement (31).

2. Appareil de lecture de disque optique selon la revendication 1 dans lequel un arrangement dudit actionneur biaxial (9) qui se compose de deux ressorts (10a, 10b) à lames focales et de deux ressorts (lla, llb) à lames radiales couplés l'un à l'autre par un connecteur intermédiaire (12) est formé dans une plaque perpendiculaire audit axe optique de ladite lentille d'objectif.

3. Appareil de lecture de disque optique selon la revendication 1 dans lequel un agencement dudit actionneur biaxial (9) qui se compose de deux ressorts (10a, 10b) à lames focales et de deux ressorts (11a, 11b) à lames radiales couplés l'un à l'autre par un connecteur intermédiaire (12) est formé dans une plaque parallèle audit axe optique de ladite lentille d'objectif.

4. Appareil de lecture de disque optique selon la revendication 1, dans lequel lesdits moyens réflecteurs (22, 23) comprennent une lentille convexe (22) prévue sur ladite tête optique et disposée sur ledit axe optique dudit faisceau de lumière de mesure du déplacement et un miroir plan (23) fixé à au moins l'un desdits lentille d'objectif et connecteur intermédiaire (12) et positionné à proximitié d'un point focal de ladite lentille convexe.

5. Appareil de lecture de disque optique selon la revendication 1, dans lequel ledit deuxième moyen de commande comprend un entraîneur d'actionneur (39) et une bobine radiale (18) fixée audit actionneur biaxial (9).
